# EUROPEAN PATENT SPECIFICATION

(11) **EP 3 297 866 B1**
(45) Date of publication and mention of the grant of the patent: **22.04.2020**
(21) Application number: 16796832.0
(22) Date of filing: 12.05.2016
(51) Int. Cl.: B60K 11/08, B62D 35/00

(54) **A COMMERCIAL VEHICLE COMPRISING A SUPERSTRUCTURE AND A CHASSIS**
NUTZFAHRZEUG MIT EINEM ÜBERBAU UND EINEM FAHRGESTELL
VÉHICULE UTILITAIRE COMPRENANT UNE SUPERSTRUCTURE ET UN CHÂSSIS

(30) Priority: 21.05.2015 SE 1550642
(43) Date of publication of application: 28.03.2018
(73) Proprietor: Scania CV AB, 151 87 Södertälje (SE)
(72) Inventor: NOGHABAI, Kamran, 129 50 Hägersten (SE)
(74) Representative: Scania CV AB
(86) International application number: PCT/SE2016/050426
(87) International publication number: WO 2016/186550

(56) References cited:
- EP-A1- 0 476 286
- WO-A1-2010/026444
- WO-A1-2013/191616
- DE-A1- 2 801 339
- SE-C2- 501 861

## Description

### TECHNICAL FIELD

The invention relates to the field of aerodynamic characteristics of commercial vehicles, e.g. trucks and buses, or more specifically to how air flows are guided round a superstructure of vehicles. The invention relates also to a method applicable in the manufacture of a commercial vehicle for arranging means for redirection of air flows.

### BACKGROUND AND PRIOR ART

The configuration of front corners of cabs or bodies of commercial vehicles greatly influences air resistance to the vehicles and the degree of fouling of the adjoining side of the cab or body. Known air deflectors intended to reduce the air resistance and counter such fouling usually comprise a curved shield which extends round the cab or body corner in order, when the vehicle is in motion, to guide an air flow, i.e. the draught caused by the moving vehicle, round the corner and along the side of the cab or body in order thereby to reduce the air resistance and cause the side to be cleaned by an air flow which counters its fouling from below by spray and dirt particles. An example of such an air deflector is referred to in DE 2726739 A1.

SE 536551 C2 refers to an air deflector provided with a turbulence generator which converts an air flow generated by the moving vehicle to a turbulent flow which follows a side of the vehicle which adjoins a corner of its cab, and hinders fouling of the side from below.

SE 501861 C2 is related to a screening device for diverting and/or absorbing sound waves. It is shaped to follow the outer contour of the driver's cab of a goods vehicle, and is arranged to cover a significant part of the gap between the cab and the vehicle frame. The screening device has two flanks which join to form a hill-shaped cross section mounted on the vehicle frame for penetration into a recess in the cab. The screening device is removably attached to a mudguard fixed to the vehicle frame and/or to an access step and/or to a bumper.

WO 2013/191616 A1 shows an air deflector at a front corner of a cab of a freight vehicle, The air deflector comprises a swirl generator which converts an air flow induced by the vehicle's forward movement to a swirling flow which follows a side of the vehicle situated adjacent to the corner and prevents dirtying of the side from below. The swirl generator comprises a duct which is open downwards, is connected to the cab corner, extends curvingly round the corner from the cab front to the cab side and comprises partly an upper end surface and partly opposite sides which are directed downwards, at least one of these sides having a free lower end edge.

A problem with known solutions is that the air flow round cab or body corners may be affected and disrupted by other air flows, causing the air resistance to increase and weakening or even eliminating the cleaning effect of the air flow round the corner. Impinging and disruptive air flows may for example occur in the case of commercial vehicles which have their engine situated in a chassis below a superstructure, i.e. below a cab or body. In such vehicles the underside of the superstructure constitutes the upper boundary surface of the engine space. Below the engine there are often casings which are intended inter alia to reduce the propogation of noise from the engine and which constitute the lower boundary surface of the engine space.

The superstructure is also often suspended resiliently relative to the chassis and a gap is provided between the superstructure and the chassis to allow relative movement between them. A driver space is provided in the superstructure, usually at a relatively great height above the ground surface. To make it easier to climb up to and down from the driver space, the vehicle is therefore often provided with boarding stairways, either on both sides of the superstructure or on only one side.

A radiator is provided in front of the engine in the vehicle's direction of movement. Such a location of the radiator results in a cooling air flow through the radiator, through the engine space and out from the engine space through an aperture in the rear wall of the cab or body when the vehicle is in motion and is therefore subject to draught caused by its movement.

The radiator, the engine and the boundary surfaces cause the engine space to be relatively cramped, subjecting the air passing through the engine space to substantial flow resistance and pressure drop. This leads to part of the air flow leaking from the engine space, e.g. in the region round the boarding stairway and through the gap between the superstructure and the chassis, and affecting the air flow round cab or body corners, inter alia by pushing it out from its location close to the side of the cab or body. This results in the air resistance and hence also the fuel consumption increasing and in the vehicle's side being only cleaned by a limited air flow, or in the air flow passing the vehicle's side without any cleaning action.

### SUMMARY OF THE INVENTION

One object of the present invention is to improve a commercial vehicle's aerodynamic characteristics by proposing means for redirection of an air flow to reduce the vehicle's air resistance and hence also its fuel consumption. A further object is to propose means for redirection of an air flow to reduce the degree of fouling of the side of a vehicle's superstructure. These and other objects are achieved by the features indicated in the claims set out below.

Using the redirecting means according to the invention will reduce the disorderly leakage flow from the engine space to the side of the cab or body, which means that the air flow, i.e. the draught caused by the moving vehicle, which is guided round the corner section and along the side will not be pushed away but will instead be allowed to pass close to the side, thereby reducing the vehicle's air resistance and hence also its fuel consumption and effectively countering spray and other dirt particles from the wheels reaching the cab and the side of the vehicle's door.

In an advantageous embodiment the redirecting means is situated in a transition region between the vehicle's corner section and side section. This is a desirable location in that the path from the air inlet apertures in the front section to the transition region presents the shortest distance and least resistance for the leakage flow.

In a further advantageous embodiment the redirecting means is situated on a boarding stairway. This facilitates the assembly of the vehicle in making it possible for the redirecting means to be prefitted on the boarding stairway to create a unit for subsequent fitting on the vehicle.

The redirecting means may with advantage be employed on a vehicle which has its cab suspended resiliently on a chassis. The redirecting means will then cover at least part of the clearance which is provided between the cab and the chassis to enable the cab to spring relative to the chassis, and will prevent leakage flows through the clearance.

The redirecting means may also with advantage be employed on a vehicle with a turbulence generator adapted to converting an air flow generated by the moving vehicle to a turbulent flow which follows the vehicle's side section adjoining the corner section. The turbulence generator will reduce the degree of fouling of the side of the cab or body without increasing the vehicle's air resistance, but the cleaning effect of the turbulent flow will increase while at the same time the vehicle's air resistance will decrease because the redirecting means enables the turbulent flow to pass close to the side of the vehicle and not be pushed away from it by a leakage flow from the engine.

Other features and advantages of the invention are indicated by the claims, the description of embodiment examples and the attached drawings.

### BRIEF DESCRIPTION OF THE DRAWINGS

Embodiments of the invention are described below by way of examples with reference to the attached drawings, in which:
Fig. 1 depicts a view obliquely from in front of the forward section of a vehicle with an air deflector and redirecting means according to the invention.
Fig. 2 depicts a side view with parts cut away of a front corner with an air deflector according to Fig. 1.
Fig. 3 depicts a view on a larger scale of a region provided with an air deflector according to Fig. 2.
Fig. 4 depicts a view on a larger scale of a region provided with an alternative embodiment of the air deflector in Fig. 3.
Fig. 5 depicts a side view with parts cut away of an engine space in the vehicle depicted in Fig. 1.
Fig. 6 depicts a top view with parts cut away of a front corner with an air deflector.
Fig. 7 depicts a top view with parts cut away of a front corner with an air deflector and redirecting means.
Fig. 8 depicts a view obliquely from in front of a boarding stairway with redirecting means.

### DETAILED DESCRIPTION OF EMBODIMENTS OF THE INVENTION

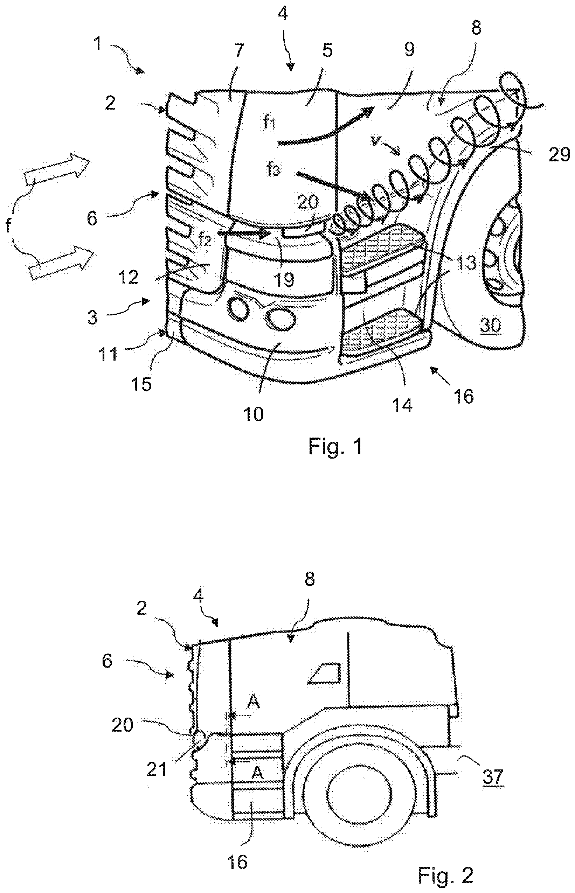

Figure 1 depicts the forward section of a vehicle 1, in this case a freight vehicle in the form of a tractor vehicle intended to haul an undepicted semitrailer. The vehicle 1 has a superstructure in the form of a cab 2 with a front surface 6 facing forwards in the vehicle's direction of movement. The cab is mounted resiliently in a manner not depicted in more detail on a frame in the form of a chassis 3.

At least one front corner section 4, only one being depicted in Fig. 1, is situated on each side of the front surface 6. At the level of the cab 2, each corner section 4 takes the form of a curved corner panel 5 situated between an upper front hatch 7, which forms part of the front surface 6, and a side section 8 which extends from the corner section, rearwards in the vehicle's direction of movement, and which comprises a vehicle door 9. At the level of the chassis 3 the corner section 4 takes the form of a curved section 10 of a bumper 11. The upper portion of the curved section 10 extends between a lower front hatch 12, which is part of the vehicle's front surface 6, and a boarding stairway 16 with stair elements in the form of steps 13 situated in a stairwell 14 below the door 9. The lower portion of the curved section 10 extends between a forward portion 15 of the bumper 11 and the boarding stairway 16.

When the vehicle is in motion, a first air flow f1 generated by the draught f caused by the vehicle's movement is guided round the corner section 4 and along the side section 8 in order thereby to reduce the air resistance and cause the side section 8 to be continuously cleaned by an air flow f1 which counters its fouling from below by spray and dust particles.

At each corner section 4 between the cab 2 and the chassis 3 there is a recess 19 open outwards which extends round and along substantially the whole corner section and continues along the lower edge of the door 9. The recess 19 is provided because the cab 2, which is suspended resiliently with overlap on the outside of the chassis 3, needs a vertical clearance for its springing movements relative to the chassis. The recess 19 per se thus constitutes and leaves the necessary clearance to make it possible for the cab 2 to spring relative to the chassis 3 without the cab and the chassis colliding with one another.

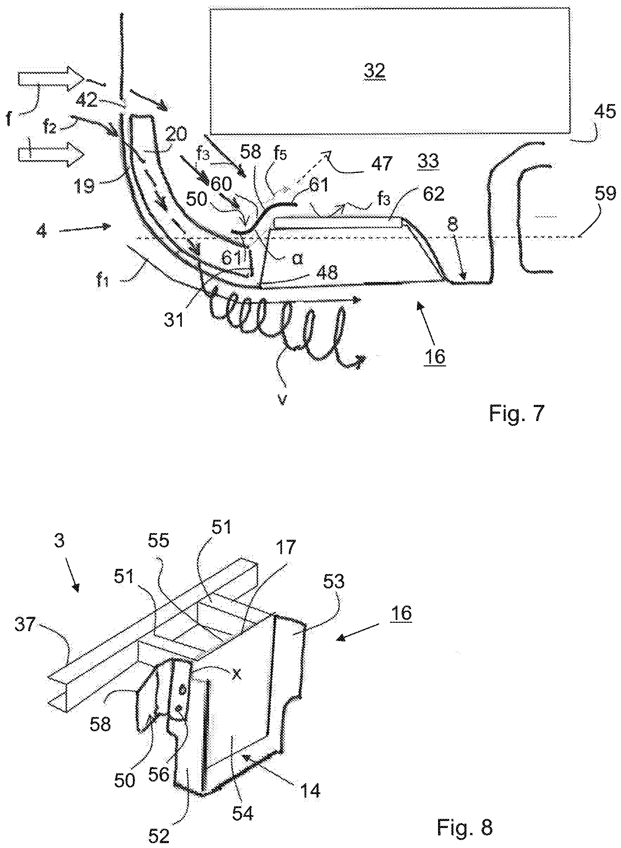

In an alternative embodiment a schematically depicted air deflector 20 is situated in the recess 19. The air deflector 20 is of the type known as turbulence generator and comprises an aerodynamically acting surface such as a blade or the like which creates a second air flow, an air vortex v capable of clinging or being drawn to the side section 8, in order to further reduce the air resistance and enhance the cleaning effect. The air deflector's outlet 31 (fig. 7) is with advantage situated in the vehicle's longitudinal direction in or substantially in a corner transition region 48 between the front corner section 4 and the side section 8.

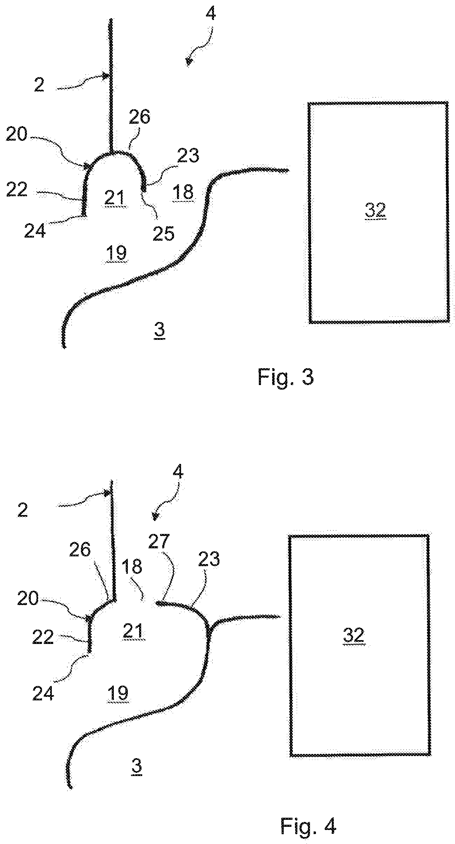

The air deflector 20 comprises an elongate air-channelling duct which is open downwards. Figure 2 depicts a cross-section of the duct 21 at a location close to the front surface 6. The duct 21 is connected to the front corner section 4 of the cab 2 and extends curvingly round substantially the whole corner section from the front surface 6 to the side surface 8 of the cab. The duct 21 comprises, as may best be seen in Figure 3, which depicts a cross-section of the duct at a location A-A (Figure 2), two substantially vertical opposite sides 22, 23 directed downwards, each with a respective free lower end edge 24, 25, and an arcuate upper portion 26 which joins together the sides 22, 23. The first side 22 faces towards the outside of the vehicle and the second side 23 faces towards an engine 32 situated in the vehicle. The sides 22, 23 extend down towards the chassis 3 in the outwardly open recess 19 but leave a clearance 18 which makes it possible for the cab 2 to spring relative to the chassis 3 without the cab and the chassis colliding with one another.

Figure 4 depicts an alternative embodiment of the air deflector 20. In this embodiment the second side 23 of the downwardly open duct 21 is connected to the chassis 3 and therefore has no free lower end edge but instead a free upper end edge 27. The second side 23 extends from the chassis 3 towards the cab 2 but leaves a clearance 18 which takes the form of an aperture in the arcuate portion 26 and which makes it possible for the cab 2 to spring relative to the chassis 3 without the cab and the chassis colliding with one another.

As depicted in Fig. 1, when the vehicle is in motion an air flow f2 generated by the draught f caused by the moving vehicle is guided into the recess 19 and on through the air deflector 20, which converts the air flow f2 to a second air flow, a turbulent flow v which, after having left the air deflector 20, moves along the side section 8. More specifically, in the example depicted the turbulent flow *v* moves substantially along the lower portion of the vehicle door 9 before being guided upwards along a sloping plane of a mudguard 29 fitted over a wheel 30. The turbulent flow v reduces the air resistance and prevents spray and other dirt particles from the wheel 30 reaching the cab 2 and the side of the vehicle door 9.

A problem in the case of known corner sections 4 and air deflectors 20 is that the first air flow f1 and/or the second air flow, i.e. the turbulent flow v, may be affected and disrupted by other air flows which may arise on vehicles which have their engine situated in the chassis 3 below the cab 2.

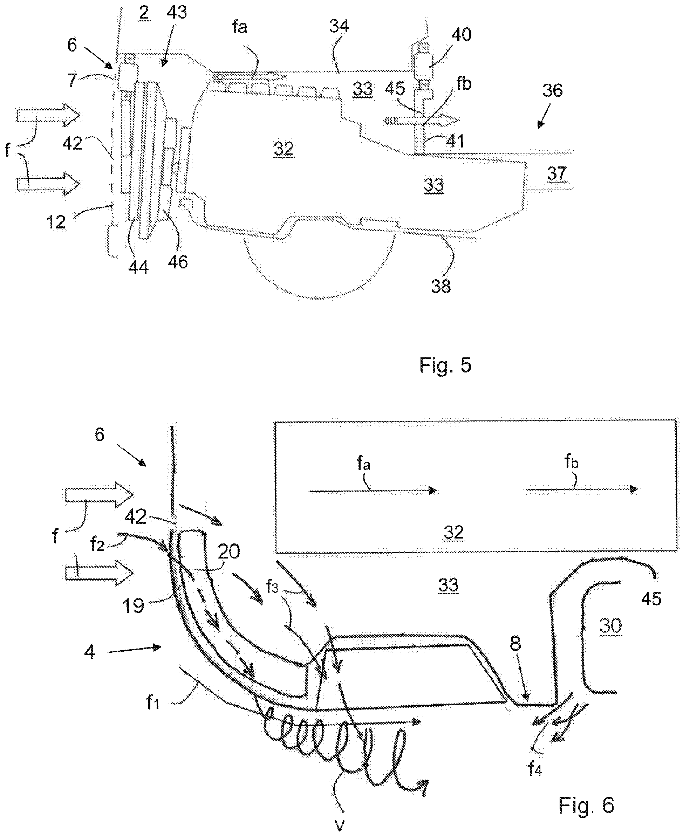

To illustrate this, Figure 5 depicts a side view with parts cut away of the vehicle 1 depicted in Fig. 1. An engine 32, in this example a diesel engine, is situated in a space, an engine space 33, below the floor 34 of the cab 2 behind the front surface 6. The floor 34 thus constitutes an upper boundary of the extent of the engine space 33.

The engine 32 is fitted in the chassis to a vehicle frame 36 which comprises two elongate parallel frame side members 37, only one of them depicted in the drawing, connected to one another by a number of undepicted cross-members, and is arranged to transmit propulsive torque to undepicted tractive wheels via an undepicted powertrain. A noise shield 38 is situated between the frame side members 37 at a location below the engine 32 and constitutes a lower boundary of the extent of the engine space 33.

A number of spring means 40 in the form of gas springs are situated between the cab 2 and the vehicle frame 36. One end of each gas spring 40 bears against the vehicle frame 36, either directly or via an intermediate bracket 41, while its other end bears against the cab 2. The spring means 40 support the cab 2 and balance it in a resilient state during operation of the vehicle 1.

The upper and lower front hatches 7, 12 of the front section 6 are provided with inlet apertures 42 intended to supply to a cooling system 43 the air flow f generated by the draught caused by the moving vehicle. The cooling system 43 contains a circulating coolant which is circulated in an undepicted line system. The circulating coolant is intended to cool the engine 32 and releases its heat in a radiator 44 situated close to the front section 6. The circulating coolant is cooled in the radiator by the air flow f which, after having passed through the inlet apertures 42, proceeds through passages in the radiator and on through the engine space 33, which is tunnel-shaped. After having passed through the engine space 33, the air flow f leaves the engine space through an aperture 45 at the rear edge of the cab 2. The path of the air flow f through the engine space is represented symbolically by arrows fa, fb. The radiator 44 may be provided with a fan 46 to increase the air flow f towards the radiator. The fan 46 may be active or not, but in either case the air flow f will pass through the engine space 33 when the vehicle is running.

The vehicle's power plant, i.e. the radiator 44, the engine 32 and a gearbox 35, but also the cab floor 34, the noise shield 38 and other components round the engine 32, make the engine space 33 relatively cramped, subjecting the air flow f passing through the engine space to substantial flow resistance and pressure drop. This leads to an air flow f3, constituting at least part of the air flow f, leaking from the engine space, e.g. in the region round the boarding stairway 16 depicted in Figure 1 and/or through the recess 19 and the clearance 18 between the cab 2 and the chassis 3, since the path to the boarding stairway 16, the recess 19 and the clearance 18 presents the shortest distance and least resistance for the air flow f3. The leaking air flow f3 may weaken and alter the direction of the first air flow f1 and/or the second air flow, i.e. the turbulent flow v, causing the cleaning effect of the air flows f1, v to decrease or even cease and the air resistance and hence also the fuel consumption to increase.

Figure 6 depicts a composite schematic diagram of the various air flows. When the vehicle is in motion, the first air flow f1 generated by the draught f caused by the moving vehicle is guided round the corner section 4 and along the side section 8. In an alternative embodiment the air flow f2 generated by the draught f caused by the moving vehicle is guided into the recess 19 and on through the air deflector 20, which converts the air flow f2 to a second air flow, i.e. the turbulent flow v. The air flow f passes also through the inlet apertures 42 in the front surface 6 and proceeds through the engine space 33 past the engine 32 and out through the aperture 45 at the rear edge of the cab. The leaking air flow f3 may collide with and therefore weaken and alter the direction of the first air flow f1 and/or the second air flow, i.e. the turbulent flow v, with the result, when this happens, that the cleaning effect of the air flows f1, v decreases or even ceases and that the air resistance and hence also the fuel consumption increase.

According to the invention, as depicted in Fig. 7, at least one redirecting means 50 is adapted to redirecting the air flow f3, which constitutes at least part of the air flow f, in a direction f5 in which it does not affect and disrupt the first air flow f1 and/or the second air flow, i.e. the turbulent flow v which flows along the side section 8. Such a direction may be rearwards in the vehicle's direction of movement, towards the aperture 45 at the rear edge of the cab. Although only one front corner section 4 is depicted in Fig. 7, there will be at least one redirecting means 50 at the vehicle's undepicted other front corner section 4.

The redirecting means may be made of any desired material which has the right characteristics as regards material strength, ability to withstand the environment in which it is situated, etc. The redirecting means may for example be made of plastic material or a metal alloy with suitable characteristics, preferably in the form of a metal plate.

The redirecting means 50 is situated between the power plant 44, 32, 35 (Fig. 5) and the side of the side section 6 which faces towards the engine space 33 (Fig. 7) and may be at various locations in the longitudinal direction. Longitudinal direction means a direction substantially parallel with a direction from the inlet apertures 42, where incoming air f flows in, to the aperture 45 at the rear edge of the cab where the air f leaves the engine space 33. The redirecting means will with advantage in a longitudinal direction be situated in or substantially in a corner transition region 48 between the front corner section 4 and the side section 8, and in a vertical direction in or substantially in the region of the clearance 19, 18 between the cab 2 and the chassis 3.

The redirecting means 50 is with advantage associated with a chassis 3 but it is also possible to associate it with the cab 2 without loss of inventive step. In such an embodiment the redirecting means 50 will be arranged in an undepicted way to hang down from the cab 2 and extend substantially in a vertical direction downwards into or substantially into the region of the clearance 18 in the recess 19 (Fig. 1) between the cab 2 and the chassis 3 in such a way as to redirect the air flow f3 and, with maintained function, not risk hitting the corner section 4 or other portions of the cab 2 during large vertical springing movements of the cab. The redirecting means 50 will also with advantage be situated on an internal surface of the vehicle, but it is possible to associate it with an external surface without loss of inventive step.

In the embodiment schematically depicted in Figure 7, the redirecting means 50 is fitted at the boarding stairway 16 with an undepicted bracket. Fig. 8 shows the boarding stairway 16 itself fitted to a loadbearing structure 51 which is fastened to the chassis 3 or more specifically to the frame side member 37. The boarding stairway 16 has two substantially vertical opposite sides 52, 53, a forward side 54 and a rear side 55 with which the loadbearing structure 51 is associated and which connects the two vertical sides 52, 53 to one another to form the stairwell 14. The steps 13 are situated on the forward side 54 but are not depicted. The redirecting means 50 is with advantage connected firmly to the forward vertical side 52, which faces towards the corner section 4, by suitable fastenings 56, but it is of course possible to connect the redirecting means 50 to the rear vertical side 53, which faces the vehicle's end section, or at some other location associated with the boarding stairway 16 without loss of inventive step.

Figure 1 shows the outwardly open recess 19 extending round and along substantially the whole corner section 4 and continuing along the lower edge of the door 9 to make it possible for the cab 2 to spring relative to the chassis 3 without the cab and the chassis colliding with one another. The outwardly open recess 19 thus extends between the door 9 and the boarding stairway 16. Fig. 8 shows the redirecting means 50 connected to the forward vertical side 52 at a location where it protrudes to a distance x from the boarding stairway's upper edge 17 towards the outwardly open recess 19 (Fig. 1) in order to be able to redirect the third air flow f3 (Fig. 7). The redirecting means extends substantially in a vertical direction upwards into or substantially into the region of the clearance 18 in the recess 19 (Fig. 1) between the cab 2 and the chassis 3 in such a way that, with maintained function, it does not risk hitting the corner section 4 or other portions of the cab during large vertical springing movements of the cab.

The redirecting means 50 in Figure 7 may be configured in many different ways without loss of inventive step, but the various embodiments all have a guide surface 58 adapted to receiving and redirecting at least part of the third air flow f3. In one advantageous embodiment the guide surface 58 extends substantially in a vertical plane but may also be so arranged that at least part of it slopes relative to the vertical plane in order to redirect the flow f3 in a desired direction if this is more advantageous in the particular vehicle.

The guide surface 58 has a main extent from the corner section 4 in a direction 47 which forms an angle α with an imaginary line 59 which is substantially perpendicular to the extent of the front surface 6 and which extends in the vehicle's longitudinal direction through the boarding stairway 16. The angle α may be between 0° and 90° but preferably between 20° and 70° or more advantageously between 30° and 50°.

The guide surface 58 may be substantially planar or have, for example, protrusions, ridges or raised edges for redirecting the air flow f3. It may also have various undulating or curved shapes. An example of such a curved shape is depicted in Fig. 7, where the guide surface 58 takes the form of a substantially planar section 60 and adjoining curved sections 61. In an alternative embodiment the guide surface 58 may comprise a number of substantially planar sections 60 with adjoining curved sections 61.

In one embodiment the guide surface 58 may be configured on a component in the engine space close to, for example, the corner section 4, in which case the component will itself constitute the redirecting means 50. The guide surface 58 may also be configured on a container for wash liquid or the like or on a storage compartment or the like situated close to the corner section 4, the boarding stairway 16 or their nearby surfaces.

Figure 7 depicts a second redirecting means 62 in the form of a plate or the like extending in a horizontal plane between the vertical sides 52, 53 at the upper edge 17 of the boarding stairway 16 (fig. 8). The redirecting means 62 has a guide surface for redirecting air flows f3 and preventing their flowing down in the boarding stairway 16 and proceeding out past the side section 8 and affecting the first air flow f1 and/or the second air flow, i.e. the turbulent flow v. The second redirecting means 62 may be associated with the cab 2 or with the chassis 3 but preferably with the boarding stairway 16 which forms part of the chassis structure.

The invention is not confined to the embodiments described, since numerous possibilities for modifications thereof are likely to be obvious to one skilled in the art without therein deviating from the invention's basic concept such as is defined in the claims.

## Claims

1. A commercial vehicle (1) comprising a superstructure (2) and a chassis (3), which superstructure is provided with a front surface (6) facing forwards in the vehicle's direction of movement and adapted to being subject to a draught generated by vehicle forward movement which creates an air flow (f) through and past the vehicle (1), with at least one front corner section (4) on each side of the front surface (6), with side sections (8) which extend from the respective corner sections (4) rearwards in the direction of movement of the vehicle (1), such that each corner section (4) is configured to guide the air flow (f) round the corner section (4) and along the side section (8) in a first air flow (f1) and/or a second air flow (v), and with a space (33) configured to have part (fa, fb, f3) of the air flow (f) pass through it in order to cool a power plant (44, 32, 35) situated in the space (33) and associated with the chassis (3), **characterised in that** at least one redirecting means (50) is situated in or substantially in a corner transition region (48) between the front corner section (4) and the side section (8) and comprises a guide surface (58) extending substantially in a vertical plane and having a main extent from the corner section (4) in a direction (47) which forms an angle (α) with an imaginary line (59) which is substantially perpendicular to the extent of the front surface (6) and which extends in the longitudinal direction of the vehicle (1), which angle (α) is between 0° and 90° but preferably between 20° and 70°, so that the redirecting means (50) is adapted to redirecting an air flow (f3) which constitutes at least part of the air flow (f) which is intended to flow through the space (33), mainly in the vehicle's longitudinal direction, but which leaks from the engine space (33), in a direction (f5) such as not to affect the first air flow (f1) and/or the second air flow (v).

2. A commercial vehicle according to claim 1, in which the redirecting means (50) is situated between the power plant (44, 32, 35) and the side of the side section (8) which faces towards the space (33).

3. A commercial vehicle according to either of claims 1-2, **characterised in that** the redirecting means (50) is adapted to redirecting the air flow (f3) rearwards in the direction of movement of the vehicle (1).

4. A commercial vehicle according to any one of the foregoing claims, in which the angle (α) is between 30° and 50°.

5. A commercial vehicle according to any one of the foregoing claims, in which the guide surface (58) is configured with at least one substantially planar section (60) and adjoining curved sections (61).

6. A commercial vehicle according to any one of the foregoing claims, in which the cab (2) is mounted resiliently on the chassis (3) and there is between the cab (2) and the chassis (3) a recess (19) open outwards which extends round and along the respective corner sections (4) and side sections (8) and leaves a clearance (18) which makes it possible for the cab (2) to spring relative to the chassis (3) without the cab (2) and the chassis (3) colliding with one another.

7. A commercial vehicle according to claim 6, in which the redirecting means (50) is associated with the chassis (3) and extends substantially in a vertical direction upwards into or substantially into the region of the clearance (18).

8. A commercial vehicle according to any one of the foregoing claims, in which the redirecting means (50) is associated with a boarding stairway (16) and protrudes to a distance (x) from an upper edge (17) of the boarding stairway.

9. A commercial vehicle according to claim 1, in which a second redirecting means (62) extends substantially in a horizontal plane between two vertical sides (52, 53) at an upper edge (17) of a boarding stairway (16).

10. A commercial vehicle according to claim 1, in which each cab corner (4) is provided with at least one air deflector (20) in the form of a turbulence generator adapted to converting an air flow (f) generated by the draught caused by the moving vehicle to a turbulent flow (v) which follows the side section (8) of the vehicle (1) adjoining the front corner section (4).

11. A commercial vehicle according to claim 10, **characterised in that** the air outlet (31) of the air deflector (20) is situated in or substantially in a corner transition region (48) between the front corner section (4) and the side section (8).

12. A method for manufacturing a commercial vehicle (1) comprising a superstructure (2) and a chassis (3), which superstructure is provided with a front surface (6) facing forwards in the vehicle's direction of movement and adapted to being subject to a draught generated by vehicle forward movement which creates an air flow (f) through and past the vehicle (1), with at least one front corner section (4) on each side of the front surface (6), with side sections (8) which extend from the respective corner sections (4) rearwards in the direction of movement of the vehicle (1), such that each corner section (4) is configured to guide the air flow (f) round the corner section (4) and along the side section (8) in a first air flow (f1) and/or a second air flow (v), and with a space (33) configured to have part (fa, fb, f3) of the air flow (f) pass through it in order to cool an engine (32) situated in the space (33) and associated with the chassis (3), ***characterised* by** providing the vehicle with at least one redirecting means (50) which is situated in or substantially in a corner transition region (48) between the front corner section (4) and the side section (8) and comprises a guide surface (58) extending substantially in a vertical plane and having a main extent from the corner section (4) in a direction (47) which forms an angle (α) with an imaginary line (59) which is substantially perpendicular to the extent of the front surface (6) and extends in the longitudinal direction of the vehicle (1), which angle (α) is between 0° and 90° but preferably between 20° and 70°, in order to redirect an air flow (f3) which constitutes at least part of the air flow (f) which is intended to flow through the space (33), mainly in the vehicle's longitudinal direction, but which leaks from the engine space (33), in a direction (f5) such as not to affect the first air flow (f1) and/or the second air flow (v).

## Patentansprüche

1. Nutzfahrzeug (1) mit einem Aufbau (2) und einem Fahrgestell (3), wobei der Aufbau mit einer Frontfläche (6) versehen ist, die in der Bewegungsrichtung des Fahrzeugs nach vorne gewandt und dazu eingerichtet ist, einem durch eine Fahrzeugvorwärtsbewegung generierten Druck ausgesetzt zu sein, der eine Luftströmung (f) durch das und an dem Fahrzeug (1) vorbei erzeugt, mit wenigstens einem vorderen Eckabschnitt (4) auf jeder Seite der Frontfläche (6), mit Seitenabschnitten (8), die von den entsprechenden Eckabschnitten (4) in der Bewegungsrichtung des Fahrzeugs (1) nach hinten verlaufen, sodass jeder Eckabschnitt (4) dazu eingerichtet ist, die Luftströmung (f) um den Eckabschnitt (4) und entlang des Seitenabschnitts (8) in einem ersten Luftstrom (f1) und/oder einem zweiten Luftstrom (v) zu führen, und mit einem Raum (33), der dazu eingerichtet ist, einen Teil (fa, fb, f3) der Luftströmung (f) durch ihn passieren zu lassen, um ein Antriebsaggregat (44, 32, 35) zu kühlen, das sich in dem Raum (33) befindet und mit dem Fahrgestell (3) in Verbindung steht, **dadurch gekennzeichnet, dass** wenigstens eine Umlenkeinrichtung (50) an oder im Wesentlichen in einem Eckenübergangsbereich (48) zwischen dem vorderen Eckabschnitt (4) und dem Seitenabschnitt (8) angeordnet ist und eine Leitfläche (58) aufweist, die sich im Wesentlichen in einer Vertikalebene erstreckt und eine Haupterstreckung von dem Eckabschnitt (4) in einer Richtung (47) hat, die einen Winkel (α) mit einer imaginären Linie (59) bildet, welche im Wesentlichen rechtwinklig zur Erstreckung der Frontfläche (6) ist und die in der Längsrichtung des Fahrzeugs (1) verläuft, wobei der Winkel (α) zwischen 0° und 90° liegt, vorzugsweise jedoch zwischen 20° und 70°, sodass die Umlenkeinrichtung (50) einen Luftstrom (f3), der zumindest einen Teil der Luftströmung (f) darstellt und der dazu vorgesehen ist, hauptsächlich in der Fahrzeuglängsrichtung durch den Raum (33) zu strömen, der jedoch aus dem Motorraum (33) entweicht, in eine Richtung (f5) derart umzulenken vermag, dass der erste Luftstrom (f1) und/oder der zweite Luftstrom (v) nicht beeinträchtigt wird.

2. Nutzfahrzeug nach Anspruch 1, bei dem die Umlenkeinrichtung (50) zwischen dem Antriebsaggregat (44, 32, 35) und der Seite des Seitenabschnitts (8) angeordnet ist, die dem Raum (33) zugewandt ist.

3. Nutzfahrzeug nach einem der Ansprüche 1 oder 2, **dadurch gekennzeichnet, dass** die Umlenkeinrichtung (50) den Luftstrom (f3) in der Bewegungsrichtung des Fahrzeugs (1) nach hinten umzulenken vermag.

4. Nutzfahrzeug nach einem der vorhergehenden Ansprüche, bei dem der Winkel (a) zwischen 30° und 50° liegt.

5. Nutzfahrzeug nach einem der vorhergehenden Ansprüche, bei dem die Leitfläche (58) mit zumindest einem im Wesentlichen ebenen Abschnitt (60) und angrenzenden gekrümmten Abschnitten (61) ausgeführt ist.

6. Nutzfahrzeug nach einem der vorhergehenden Ansprüche, bei dem das Führerhaus (2) federnd nachgiebig auf dem Fahrgestell (3) angebracht ist und sich zwischen dem Führerhaus (2) und dem Fahrgestell (3) eine nach außen offene Aussparung (19) befindet, die um die und entlang der zugehörigen Eckabschnitte (4) und Seitenabschnitte (8) verläuft und einen Freiraum (18) hinterlässt, der es dem Führerhaus (2) ermöglicht, bezüglich des Fahrgestells (3) zu federn, ohne dass das Führerhaus (2) und das Fahrgestell (3) miteinander kollidieren.

7. Nutzfahrzeug nach Anspruch 6, bei dem die Umlenkeinrichtung (50) dem Fahrgestell (3) zugehörig ist und sich im Wesentlichen in einer Vertikalrichtung aufwärts in den oder im Wesentlichen in den Bereich des Freiraums (18) erstreckt.

8. Nutzfahrzeug nach einem der vorhergehenden Ansprüche, bei dem die Umlenkeinrichtung (50) einem Einstiegsschweller (16) zugehörig ist und von einem oberen Rand (17) des Einstiegsschwellers bis zu einer Distanz (x) vorsteht.

9. Nutzfahrzeug nach Anspruch 1, bei dem eine zweite Umlenkeinrichtung (62) im Wesentlichen in einer Horizontalebene zwischen zwei vertikalen Seiten (52, 53) an einem oberen Rand (17) eines Einstiegsschwellers (16) verläuft.

10. Nutzfahrzeug nach Anspruch 1, bei dem jede Führerhausecke (4) mit zumindest einem Luftabweiser (20) in Gestalt eines Turbulenzgenerators versehen ist, der eine Luftströmung (f), die durch den durch das sich bewegende Fahrzeug hervorgerufenen Druck erzeugt wird, in eine turbulente Strömung (v) umzuwandeln vermag, die dem an den vorderen Eckabschnitt (4) angrenzenden Seitenabschnitt (8) des Fahrzeugs (1) folgt.

11. Nutzfahrzeug nach Anspruch 10, **dadurch gekennzeichnet, dass** der Luftauslass (31) des Luftabweisers (20) in oder im Wesentlichen in einem Eckenübergangsbereich (48) zwischen dem vorderen Eckabschnitt (4) und dem Seitenabschnitt (8) angeordnet ist.

12. Verfahren zum Herstellen eines Nutzfahrzeugs (1) mit einem Aufbau (2) und einem Fahrgestell (3), wobei der Aufbau mit einer Frontfläche (6) versehen ist, die in der Bewegungsrichtung des Fahrzeugs nach vorne gewandt und dazu eingerichtet ist, einem durch eine Fahrzeugvorwärtsbewegung erzeugten Druck ausgesetzt zu sein, der eine Luftströmung (f) durch das und an dem Fahrzeug (1) vorbei erzeugt, mit wenigstens einem vorderen Eckabschnitt (4) auf jeder Seite der Frontfläche (6), mit Seitenabschnitten (8), die von den zugehörigen Eckabschnitten (4) in der Bewegungsrichtung des Fahrzeugs (1) nach hinten verlaufen, sodass jeder Eckabschnitt (4) die Luftströmung (f) um den Eckabschnitt (4) und entlang des Seitenabschnitts (8) in einem ersten Luftstrom (f1) und/oder einem zweiten Luftstrom (v) zu führen vermag, und mit einem Raum (33), der dazu eingerichtet ist, einen Teil (fa, fb, f3) der Luftströmung (f) durch ihn passieren zu lassen, um einen in dem Raum (33) angeordneten und mit dem Fahrgestell (3) in Verbindung stehenden Motor (32) zu kühlen, **gekennzeichnet durch** Versehen des Fahrzeugs mit wenigstens einer Umlenkeinrichtung (50), die sich in oder im Wesentlichen in einem Eckenübergangsbereich (48) zwischen dem vorderen Eckabschnitt (4) und dem Seitenabschnitt (8) befindet und eine Leitfläche (58) aufweist, die im Wesentlichen in einer Vertikalebene verläuft und eine Haupterstreckung von dem Eckabschnitt (4) in einer Richtung (47) hat, die einen Winkel (α) mit einer imaginären Linie (59) bildet, welche im Wesentlichen rechtwinklig zur Erstreckung der Frontfläche (6) ist und in der Längsrichtung des Fahrzeugs (1) verläuft, wobei der Winkel (α) zwischen 0° und 90° liegt, vorzugsweise jedoch zwischen 20° und 70°, um einen Luftstrom (f3), der einen Teil der Luftströmung (f) darstellt und der dazu vorgesehen ist, hauptsächlich in der Fahrzeuglängsrichtung **durch** den Raum (33) zu strömen, der jedoch aus dem Motorraum (33) entweicht, in eine Richtung (f5) derart umzuleiten, dass der erste Luftstrom (f1) und/oder der zweite Luftstrom (v) nicht beeinträchtigt wird.

## Revendications

1. Véhicule utilitaire (1) comprenant une superstructure (2) et un châssis (3), laquelle superstructure est fournie avec une surface avant (6) tournée vers l'avant dans la direction de déplacement du véhicule et adaptée pour être soumise à une pression d'air générée par le déplacement du véhicule vers l'avant qui crée un flux d'air (f) à travers et au-delà du véhicule (1), avec au moins une section d'angle avant (4) de chaque côté de la surface avant (6), avec des sections latérales (8) qui s'étendent à partir des sections d'angle (4) vers l'arrière dans le sens de déplacement du véhicule (1), de sorte que chaque section d'angle (4) est configurée pour guider le flux d'air (f) autour de la section d'angle (4) et le long de la section latérale (8) dans un premier flux d'air (f1) et/ ou un deuxième flux d'air (v), et avec un espace (33) configuré pour qu'une partie (fa, fb, f3) du flux d'air (f) le traverse pour refroidir un groupe moteur (44, 32, 35) situé dans l'espace (33) et associé au châssis (3), **caractérisé en ce qu'**au moins un moyen de redirection (50) est situé dans ou sensiblement dans une région de transition d'angle (48) entre la section d'angle avant (4) et la section latérale (8) et comprend une surface de guidage (58) s'étendant sensiblement dans un plan vertical et ayant une étendue principale à partir de la section d'angle (4) dans une direction (47) qui forme un angle (α) avec une ligne imaginaire (59) qui est sensiblement perpendiculaire à l'étendue de la surface avant (6) et qui s'étend dans la direction longitudinale du véhicule (1), lequel angle (α) est compris entre 0° et 90° mais de préférence entre 20° et 70°, de sorte que le moyen de redirection (50) est adapté pour la redirection d'un flux d'air (f3) qui constitue au moins une partie du flux d'air (f) qui est destiné à circuler à travers l'espace (33), principalement dans la direction longitudinale du véhicule, mais qui fuit de l'espace moteur (33), dans une direction (f5) de sorte à ne pas affecter le premier flux d'air (f1) et/ ou le deuxième flux d'air (v) .

2. Véhicule utilitaire selon la revendication 1, dans lequel les moyens de redirection (50) se situent entre l'usine électrique (44, 32, 35) et le côté de la section latérale (8) qui sont orientés vers l'espace (33).

3. Véhicule utilitaire selon l'une quelconque des revendications 1-2, **caractérisé en ce que** le moyen de redirection (50) est adapté pour la redirection du flux d'air (f3) vers l'arrière dans la direction du déplacement du véhicule (1).

4. Véhicule utilitaire selon l'une quelconque des revendications précédentes, dans lequel l'angle (α) est compris entre 30° et 50°.

5. Véhicule utilitaire selon l'une quelconque des revendications précédentes, dans lequel la surface de guidage (58) est configurée avec au moins une section essentiellement planaire (60) et des sections incurvées adjacentes (61).

6. Véhicule utilitaire selon l'une quelconque des revendications précédentes, dans lequel la cabine (2) est montée de manière durable sur le châssis (3) et il y a entre la cabine (2) et le châssis (3) un évidement (19) ouvert vers l'extérieur qui s'étend autour et le long des sections d'angle respectives (4) et des sections latérales (8) et laisse un dégagement (18) qui permet à la cabine (2) de sauter par rapport au châssis (3) sans que la cabine (2) et le châssis (3) n'entrent en collision l'une avec l'autre.

7. Véhicule utilitaire selon la revendication 6, dans lequel le moyen de redirection (50) est associé au châssis (3) et s'étend sensiblement dans une direction verticale vers le haut dans ou essentiellement dans la région du dégagement (18).

8. Véhicule utilitaire selon l'une quelconque des revendications précédentes, dans lequel le moyen de redirection (50) est associé à un escalier d'embarquement (16) et dépasse à une distance (x) d'un bord supérieur (17) de l'escalier d'embarquement.

9. Véhicule utilitaire selon la revendication 1, dans lequel un deuxième moyen de redirection (62) s'étend sensiblement dans un plan horizontal entre deux côtés verticaux (52, 53) à un bord supérieur (17) d'un escalier d'embarquement (16).

10. Véhicule utilitaire selon la revendication 1, dans lequel chaque coin de cabine (4) est fourni avec au moins un déflecteur d'air (20) sous la forme d'un générateur de turbulences adapté à la conversion d'un flux d'air (f) généré par la pression d'air causée par le véhicule se déplaçant contre un flux turbulent (v) qui suit la section latérale (8) du véhicule (1) adjacent la section d'angle avant (4).

11. Véhicule utilitaire selon la revendication 10, **caractérisé en ce que** la sortie d'air (31) du déflecteur d'air (20) est située dans ou sensiblement dans une région de transition d'angle (48) entre la section d'angle avant (4) et la section latérale (8).

12. Procédé de fabrication d'un véhicule utilitaire (1) comprenant une superstructure (2) et un châssis (3), laquelle superstructure est fournie avec une surface avant (6) tournée vers l'avant dans la direction de déplacement du véhicule et adaptée pour être soumise à une pression d'air générée par le déplacement du véhicule vers l'avant qui crée un flux d'air (f) à travers et au-delà du véhicule (1), avec au moins une section d'angle avant (4) de chaque côté de la surface avant (6), avec des sections latérales (8) qui s'étendent à partir des sections d'angle (4) vers l'arrière dans le sens de déplacement du véhicule (1), de sorte que chaque section d'angle (4) est configurée pour guider le flux d'air (f) autour de la section d'angle (4) et le long de la section latérale (8) dans un premier flux d'air (f1) et/ ou un deuxième flux d'air (v), et avec un espace (33) configuré pour qu'une partie (fa, fb, f3) du flux d'air (f) le traverse pour refroidir un moteur (32) situé dans l'espace (33) et associé au châssis (3), ***caractérisé par*** la fourniture au véhicule d'au moins un moyen de redirection (50) qui est situé dans ou sensiblement dans une région de transition d'angle (48) entre la section d'angle avant (4) et la section latérale (8) et comprend une surface de guidage (58) s'étendant sensiblement dans un plan vertical et ayant une étendue principale à partir de la section d'angle (4) dans une direction (47) qui forme un angle (α) avec une ligne imaginaire (59) qui est sensiblement perpendiculaire à l'étendue de la surface avant (6) et qui s'étend dans la direction longitudinale du véhicule (1), lequel angle (a) est compris entre 0° et 90° mais de préférence entre 20° et 70°, de sorte à rediriger un flux d'air (f3) qui constitue au moins une partie du flux d'air (f) qui est destiné à circuler à travers l'espace (33), principalement dans la direction longitudinale du véhicule, mais qui fuit de l'espace moteur (33), dans une direction (f5) de sorte à ne pas affecter le premier flux d'air (f1) et/ ou le deuxième flux d'air (v).
